# EUROPÄISCHE PATENTSCHRIFT

(11) **EP 3 993 375 B1**
(45) Veröffentlichungstag und Bekanntmachung des Hinweises auf die Patenterteilung: **10.12.2025**
(21) Anmeldenummer: 21201652.1
(22) Anmeldetag: 08.10.2021
(51) Int. Cl.: H04M 1/72415, F24C 7/08, F25D 29/00, H04L 12/28

(54) **KOPPLUNG EINES HAUSHALTSGERÄTS MIT EINEM MOBILGERÄT**
COUPLING OF A DOMESTIC APPLIANCE WITH A MOBILE DEVICE
COUPLAGE D'UN APPAREIL ÉLECTROMÉNAGER AVEC UN APPAREIL MOBILE

(30) Priorität: 02.11.2020 DE 102020213756
(43) Veröffentlichungstag der Anmeldung: 04.05.2022
(73) Patentinhaber: BSH Hausgeräte GmbH, 81739 München (DE)
(72) Erfinder: Grimminger, Jochen, 89407 Dillingen (DE); Kleinlein, Philipp, 81371 München (DE); Koene, Philip, 81245 München (DE); Schaefer, Frank, 82178 Puchheim (DE)

(56) Entgegenhaltungen:
- EP-A1- 2 787 434
- EP-A2- 2 555 474
- WO-A1-2013/087537
- CN-U- 207 503 582
- DE-A1- 102015 220 282

## Beschreibung

Die Erfindung betrifft ein Haushaltsgerät. Insbesondere betrifft die Erfindung eine drahtlose Kopplung eines Haushaltsgeräts mit einem Mobilgerät.

Ein Haushaltsgerät umfasst eine grafische Anzeige, auf der ein Zustand des Geräts dargestellt werden kann. Beispielsweise kann die Anzeige an einem Kühlgerät eine Innentemperatur, einen Füllgrad, eine aktuell aufgenommene Energie oder einen Betriebsmodus darstellen. Eine Bedienung des Haushaltsgeräts erfolgt üblicherweise mittels einer lokal angebrachten Eingabeeinrichtung, beispielsweise eines Schalters oder Drehknopfs. Die Eingabevorrichtung kann mit der Ausgabevorrichtung integriert ausgeführt sein, beispielsweise in Form eines berührungsempfindlichen Bildschirms (Touchscreen).

Die grafische Anzeige kann verwendet werden, um einem Benutzer eine zusätzliche Funktion bereitzustellen, die über die Steuerung des Haushaltsgerätes hinausgehen kann. Beispielsweise kann auf der Anzeige ein Kochrezept dargestellt werden. Es hat sich aber gezeigt, dass die Bereitstellung der zusätzlichen Funktion, im gegebenen Beispiel die Vorhaltung einer Sammlung von Kochrezepten, aufwändig zu implementieren sein kann. Die Funktion muss üblicherweise auf funktionaler Ebene und auf Daten-Ebene regelmä-ßig aktualisiert werden. Dabei kann eine Lebensdauer des Haushaltsgeräts eine Lebensdauer einer üblichen Plattform, mit der die Funktion klassischerweise bereitgestellt werden kann, um ein Vielfaches übersteigen. Das Haushaltsgerät kann daher schon weit vor dem Ende seiner Nutzungsdauer nicht mehr in der Lage sein, die zusätzliche Funktion in ihrer aktuellen Form zuverlässig auszuführen.

Eine Ausstattung des Haushaltsgeräts mit einer leistungsfähigen Verarbeitungseinrichtung kann kostenintensiv sein; außerdem ist üblicherweise nicht bekannt, welche konkreten Anforderungen zukünftig an die Bereitstellung der Funktion gestellt werden, sodass die Verarbeitungseinrichtung in einem benötigten Aspekt trotzdem unterdimensioniert sein kann.

Dokument EP2787434 offenbart eine Verbindung eines App-Bediengeräts (mobiles Endgerät mit Anwendung) mit einem App-Ausgabegerät (Desktop mit Bildschirm). Das App-Bediengerät überträgt Daten an das App-Ausgabegerät, das diese anzeigt. Das App-Ausgabegerät empfängt Eingabedaten und sendet diese an das App-Bediengerät, wo die Eingaben verarbeitet werden. Mehrere App-Bereiche werden angezeigt und in der Größe angepasst. Das Gerät kann ein Haushaltsgerät sein.

Eine der vorliegenden Erfindung zugrunde liegende Aufgabe liegt in der Bereitstellung einer verbesserten Technik zur Bereitstellung einer zusätzlichen Funktion mittels eines Haushaltsgeräts. Die Erfindung löst diese Aufgabe mittels der Gegenstände der unabhängigen Ansprüche. Unteransprüche geben bevorzugte Ausführungsformen wieder.

Nach einem ersten Aspekt der vorliegenden Erfindung umfasst ein Haushaltsgerät eine drahtlose Kommunikationseinrichtung; eine Ausgabevorrichtung; eine Eingabevorrichtung; und eine Verarbeitungseinrichtung. Dabei ist die Verarbeitungseinrichtung dazu eingerichtet, ein Mobilgerät drahtlos mit dem Haushaltsgerät zu koppeln, eine Ausgabe des Mobilgeräts mittels der Ausgabevorrichtung bereitzustellen und eine Eingabe an der Eingabevorrichtung dem Mobilgerät bereitzustellen bzw. an das Mobilgerät zu übertragen.

Es wurde erkannt, dass zur Ausführung einer zusätzlichen Funktion, die am Haushaltsgerät erbracht werden kann, ein Mobilgerät eine passendere Plattform als eine Verarbeitungseinrichtung des Haushaltsgeräts darstellen kann. Das Haushaltsgerät kann relativ einfach als "unintelligentes Endgerät" (dumb terminal) ausgeführt sein, das lediglich Ausgaben des Mobilgeräts an einen Benutzer, und Eingaben des Benutzers an das Mobilgerät übermitteln kann.

Die zusätzliche Funktion kann auf dem Mobilgerät verbessert gepflegt, aktualisiert oder mit einem externen Datenbestand synchronisiert werden. Dazu kann das Mobilgerät insbesondere ein Smartphone umfassen. Sollte ein Leistungsbedarf der Funktion die Leistungsfähigkeit des Mobilgeräts übersteigen, kann dieses relativ einfach aktualisiert werden. Das aktualisierte Mobilgerät kann in der gleichen Weise wie das ursprüngliche mit dem Haushaltsgerät gekoppelt werden. So kann das Haushaltsgerät lange benutzt werden, ohne signifikante Einschränkungen bei der Nutzbarkeit der Funktion hinnehmen zu müssen.

Das Haushaltsgerät kann beide Richtungen der Interaktion mit einem Benutzer unterstützen, sodass das Mobilgerät zur Nutzung der Funktion durch den Benutzer nicht direkt bedient werden muss. Der Benutzer kann das Mobilgerät beispielsweise bei sich tragen oder in eine Ladestation einsetzen und die Funktion am Haushaltsgerät benutzen. Dabei kann die Funktion in einem Zusammenhang mit der Benutzung des Haushaltsgeräts stehen, beispielsweise indem das Haushaltsgerät zur Zubereitung einer Speise verwendet werden kann und die Funktion die Darstellung eines Kochrezepts umfasst. Der Zusammenhang kann auch indirekt sein, etwa wenn die Funktion einen Kalender umfasst, und die Fertigstellung einer Speise auf einen Termin im Kalender abgestimmt werden soll. In noch einer Ausführungsform besteht kein klassischer funktionaler Zusammenhang, beispielsweise wenn das Haushaltsgerät einen Kühlschrank umfasst und die Funktion das Abspielen von Musik betrifft. Trotzdem kann ein Benutzer beide Funktionalitäten zur selben Zeit und am selben Ort nutzen.

Bei einigen Ausführungsformen macht das Haushaltsgerät keine Vorgaben für die Art der zusätzlichen Funktion, sodass praktisch beliebige Funktionen des Mobilgeräts mittels des Haushaltsgeräts benutzt werden können. So kann etwa eine erste Funktion des Mobilgeräts ereignisgesteuert durch eine zweite unterbrochen oder abgelöst werden, etwa wenn das Abspielen von Musik unterbrochen wird, weil ein Telefonanruf entgegengenommen werden soll.

Die Eingabevorrichtung des Haushaltsgeräts ist üblicherweise zur unmittelbaren Betätigung durch den Benutzer eingerichtet und kann etwa einen Taster, einen Schalter, einen Drehknopf oder einen Touchscreen umfassen. In einer weiteren Ausführungsform kann die Eingabevorrichtung auch zur mittelbaren Betätigung vorgesehen sein und beispielsweise einen Strichcode-Leser umfassen, dem der Benutzer einen Strichcode präsentieren kann, etwa von einer Lebensmittelverpackung, sodass der Strichcode-Leser in Abhängigkeit des erfassten Strichcodes eine Eingabe bereitstellt. Weitere beispielhafte Eingabevorrichtungen, die in Verbindung mit der hierin vorgestellten Technik verwendet werden können, umfassen eine Gestenerkennung, einen olfaktorischen Sensor (VOC: volatile organic compound) oder einen Beschleunigungssensor.

Die Ausgabevorrichtung umfasst bevorzugt einen optischen Ausgabebereich, der textuelle, numerische, alphanumerische oder grafische Ausgaben bereitstellen kann. Dazu kann die Ausgabevorrichtung insbesondere eine Anzeige oder einen Projektor umfassen. Die Ausgabevorrichtung kann aber auch eine andere Ausgabe an den Benutzer unterstützen, beispielsweise eine akustische oder haptische Ausgabe.

Die Ausgabevorrichtung kann eine optische Anzeige mit wenigstens zwei Anzeigebereichen umfassen. Dabei kann die Verarbeitungseinrichtung dazu eingerichtet sein, auf einem ersten Anzeigebereich eine Information des Haushaltsgeräts darzustellen und auf einem zweiten Anzeigebereich die Ausgabe des Mobilgeräts darzustellen.

Durch die Unterteilung der Ausgabevorrichtung in Bereiche können eine Funktion des Haushaltsgeräts und eine Funktion des Mobilgeräts einem Benutzer parallel zueinander zugänglich gemacht sein. Die Information kann insbesondere einen Betriebsparameter oder einen Arbeitszustand des Haushaltsgeräts betreffen, sodass das Haushaltsgerät unabhängig von einer Funktion des Mobilgeräts kontrollierbar bleiben kann. In einer ersten Variante können die Anzeigebereiche nebeneinander liegen und in einer zweiten Variante kann einer der Anzeigenbereiche einen anderen überlagern. Sollen mehr als eine Funktion des Mobilgeräts am Haushaltsgerät unterstützt werden, so können hierfür entsprechend viele Anzeigenbereiche auf der Ausgabevorrichtung gebildet werden. Bevorzugt ist der Anzeigenbereich für die Funktion des Haushaltsgeräts immer sichtbar, während ein Anzeigenbereich für eine Funktion des Mobilgeräts auf der Ausgabevorrichtung auch verkleinert, verdeckt oder ausgeblendet werden kann. So können beispielsweise drei Anzeigebereiche gebildet sein, von denen einer der Information des Haushaltsgeräts und ein anderer einer Funktion des Mobilgeräts zugeordnet sein kann. Der dritte Anzeigebereich kann einer oder mehreren Funktionen des Mobilgeräts zugeordnet sein, wobei die Zuordnung einer Funktion zum Anzeigebereich ereignisbasiert oder durch den Benutzer gesteuert werden kann.

Die Eingabevorrichtung kann ein erstes und ein zweites Bedienelement umfassen, wobei die Verarbeitungseinrichtung dazu eingerichtet ist, eine Funktion des Haushaltsgeräts in Abhängigkeit einer Betätigung des ersten Bedienelements zu steuern und eine Betätigung des zweiten Bedienelements dem Mobilgerät bereitzustellen bzw. an das Mobilgerät zu übertragen. So kann eine unmittelbare Steuerbarkeit des Haushaltsgeräts unabhängig von der Steuerung einer Funktion des Mobilgeräts sichergestellt sein. Insbesondere wenn das Haushaltsgerät einen potenziell gefährlichen Vorgang durchführen kann, beispielsweise ein Erhitzen, ein Kneten oder Schnitzeln, kann die Nutzung der Funktion des Mobilgeräts eine Bedien- oder Benutzungssicherheit des Haushaltsgeräts nicht beeinträchtigen.

Die Verarbeitungseinrichtung kann ferner dazu eingerichtet sein, zwei voneinander unabhängige drahtlose Datenverbindungen herzustellen, von denen eine einer Ausgabe des Mobilgeräts und die andere einer Eingabe an das Mobilgerät zugeordnet ist. Die Datenverbindungen können unterschiedliche Standards nutzen, sodass eine Verwendung eines bekannten Mobilgeräts erleichtert sein kann. Beispielsweise kann eine Ausgabe des Mobilgeräts mittels Miracast, Airplay, Google Cast, Screen Mirroring, VLC oder Wireless Display (WiDi) übermittelt werden, während eine Eingabe an das Mobilgerät etwa erfolgen kann, indem das Haushaltsgerät als Bluetooth-Eingabevorrichtung mit dem Mobilgerät gekoppelt wird. Für die unterschiedlichen Datenverbindungen können auch unterschiedliche Technologien verwendet werden, beispielsweise WLAN, Bluetooth, ZigBee oder Infrarot-Übertragung. In einer besonders bevorzugten Ausführungsform benutzt eine der Datenverbindungen das Home Connect Protokoll, das auch verwendet werden kann, um mehrere Haushaltsgeräte miteinander zu vernetzen.

Die Verarbeitungseinrichtung kann dazu eingerichtet sein, die Kopplung mit dem Mobilgerät nur dann durchzuführen, wenn ein Abstand des Mobilgeräts zum Haushaltsgerät einen ersten vorbestimmten Schwellenwert unterschreitet. Die Kopplung kann automatisch erfolgen, wenn sich ein Benutzer, der das Mobilgerät bei sich trägt, dem Haushaltsgerät nähert. Ein Eingreifen des Benutzers, beispielsweise um den Kopplungsvorgang zu bestätigen oder zu erlauben, kann nicht erforderlich sein. In einer weiteren Ausführungsform kann eine Bestätigung nur seitens des Haushaltsgeräts erforderlich sein. In noch einer weiteren Ausführungsform kann eine Bestätigung erforderlich sein, aber für eine vorbestimmte Zeit gelten, in der dann für eine erneute Kopplung keine erneute Bestätigung gegeben werden muss. Durch die automatische Kopplung kann die Oberfläche der Funktion des Mobilgeräts dem Benutzer folgen, wenn sich dieser in einem Haushalt mit mehreren Haushaltsgeräten bewegt, die eine hierin beschriebene Kopplung anbieten.

Die Verarbeitungseinrichtung kann dazu eingerichtet sein, eine bestehende Kopplung zu einem Mobilgerät aufzulösen, wenn ein Abstand des Mobilgeräts zum Haushaltsgerät einen zweiten vorbestimmten Schwellenwert überschreitet, der größer als der erste Schwellenwert ist. Die Kopplung kann entfernungsgesteuert mit einer vorbestimmten Hysterese erfolgen. Dadurch kann sichergestellt werden, dass ein Koppeln und ein Auflösen der Kopplung nicht in rascher Folge durchgeführt werden, wenn sich das Mobilgerät in einer Entfernung nahe dem ersten Schwellenwert zum Haushaltsgerät befindet.

Es ist zu beachten, dass eine hierin beschriebene Kopplung in einer Ausführungsform die Herstellung einer Datenverbindung umfassen kann, also beispielsweise im ISO/OSI-Modell auf einer oder mehreren der Schichten 1 bis 7, während in einer anderen Ausführungsform eine Kopplung lediglich die Darstellung der Ausgabe beziehungsweise die Übermittlung der Eingabe betrifft, die jeweils eine hergestellte Datenverbindung voraussetzen. Anders ausgedrückt kann eine hergestellte Datenverbindung zwischen dem Haushaltsgerät und dem Mobilgerät auch erhalten bleiben, wenn das Mobilgerät weiter als durch den zweiten Schwellenwert vorgegeben ist vom Haushaltsgerät entfernt wird, jedoch können in diesem Fall Ausgaben des Mobilgeräts unterdrückt oder Eingaben an das Mobilgerät nicht weitergeleitet werden.

Die Verarbeitungseinrichtung kann außerdem dazu eingerichtet sein, ein weiteres Mobilgerät drahtlos mit dem Haushaltsgerät zu koppeln, eine Ausgabe des weiteren Mobilgeräts mittels der Ausgabevorrichtung bereitzustellen und eine Eingabe an der Eingabevorrichtung dem weiteren Mobilgerät bereitzustellen bzw. an das weitere Mobilgerät zu übertragen. So können mehrere Mobilgeräte, die insbesondere verschiedenen Benutzer zugeordnet sein können, gleichzeitig mit dem Haushaltsgerät gekoppelt werden. Das Haushalsgerät kann eine gleichzeitige Nutzung von Funktionen beider Mobilgeräte unterstützen.

Insbesondere kann die Verarbeitungseinrichtung dazu eingerichtet sein, eine Zuordnung von Ausgaben der Mobilgeräte an die Ausgabevorrichtung und/oder eine Zuordnung von Eingaben an das Mobilgerät vorzunehmen. Die Zuordnung kann auf der Basis von Regeln erfolgen. Eine Regel kann ein Ereignis berücksichtigen, beispielsweise eine aktuelle Entfernung eines Mobilgeräts vom Haushaltsgerät. Die Zuordnung oder eine Regel kann durch einen Benutzer gesteuert werden. Unterschiedliche Benutzer können unterschiedliche Regeln aufstellen. In einer Ausführungsform können mehrere Funktionen unterschiedlicher Mobilgeräte gleichzeitig über das Haushaltsgerät gesteuert werden. In einer anderen Ausführungsform kann jeweils nur eine Funktion gesteuert werden, wobei diese aus mehreren möglichen Funktionen der Mobilgeräte ausgewählt werden kann. Es ist bevorzugt, dass die Mobilgeräte datentechnisch voneinander getrennt sind, sodass eine Einflussnahme von einem Mobilgerät auf ein anderes der Mobilgeräte aus nicht durch das Haushaltsgerät erfolgen kann.

Nach einem zweiten Aspekt der vorliegenden Erfindung umfasst ein System mehrere hierin beschriebenen Haushaltsgeräte, wobei Verarbeitungseinrichtungen der Haushaltsgeräte jeweils dazu eingerichtet sind, einen Abstand des zugeordneten Haushaltsgeräts zum Mobilgerät zu bestimmen, wobei nur eine Eingabe vom nächstgelegenen Haushaltsgerät an das Mobilgerät bereitgestellt wird. Dadurch kann ein Benutzer ein Mobilgerät bei sich tragen und eine darauf ablaufende Funktion von jeweils dem Haushaltsgerät aus steuern, das ihm am nächsten ist. Eine Bedienoberfläche für die Funktion kann dem Benutzer im Haushalt von Gerät zu Gerät folgen. Unterstützen die Haushaltsgeräte die Kopplung mit mehreren Mobilgeräten, so können mehrere Benutzer gleichzeitig im Haushalt mobil sein und ihnen jeweils zugeordnete Funktionen bequem und elegant über die Haushaltsgeräte steuern.

Zur Bestimmung, welches Haushaltsgerät einem Mobilgerät am nächsten ist, können die Haushaltsgeräte datentechnisch miteinander verbunden sein. Dazu kann eine drahtlose oder eine drahtgebundene Variante verwendet werden. Die Haushaltsgeräte können auch über eine zentrale Komponente, etwa einen Router oder einen Server, miteinander verbunden sein. Die Haushaltsgeräte können insbesondere mittels Home Connect miteinander verbunden sein. In einer Ausführungsform können die Haushaltsgeräte jeweils bestimmte Abstände zu einem Mobilgerät untereinander austauschen. Ein Haushaltsgerät kann einem anderen mitteilen, wenn es eine Funktion des Mobilgeräts steuern oder die Steuerung abgeben möchte.

Nach noch einem weiteren Aspekt der Erfindung umfasst ein weiteres System mehrere hierin beschriebene Haushaltsgeräte, wobei Verarbeitungseinrichtungen der Haushaltsgeräte jeweils dazu eingerichtet sind, eine Ausgabe des Mobilgeräts mittels einer zugeordneten Ausgabevorrichtung bereitzustellen. Die Ausgabe kann beispielsweise auf allen Haushaltsgeräten eines Haushalts oder eines Zimmers des Haushalts erfolgen. In einer Ausführungsform erfolgt eine Ausgabe auf allen Haushaltsgeräten, deren Entfernung zum Mobilgerät unter einem vorbestimmten Schwellenwert liegt.

Nach wieder einem weiteren Aspekt der vorliegenden Erfindung umfasst ein Verfahren zum Steuern eines Haushaltsgeräts Schritte des Herstellens einer drahtlosen Kopplung des Haushaltsgeräts mit einem Mobilgerät; des Erfassens einer Eingabe an einer Eingabevorrichtung des Haushaltsgeräts und Bereitstellen bzw. Übertragen der Eingabe an das Mobilgerät; und des Erfassens einer Ausgabe des Mobilgeräts und des Bereitstellens der Ausgabe mittels einer Ausgabevorrichtung des Haushaltsgeräts.

Ein Auf- und/oder Abbau der drahtlosen Kopplung und der Übermittlung von Eingaben und/oder Ausgaben zwischen dem Haushaltsgerät und dem Mobilgerät können von weiteren Faktoren abhängig sein, wie hierin beispielsweise bezüglich eines Haushaltsgeräts und eines Systems mit wenigstens einem Haushaltsgerät beschrieben ist.

Das Verfahren kann dazu eingerichtet sein, ganz oder teilweise auf einem hierin beschriebenen Haushaltsgerät, dessen Steuervorrichtung oder einer davon umfassten Verarbeitungseinrichtung ausgeführt zu werden. Dazu kann die Verarbeitungseinrichtung einen programmierbaren Mikrocomputer oder Mikrocontroller umfassen. Das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die entsprechende Vorrichtung bzw. das System übertragen werden oder umgekehrt.

Ausführungsformen der Erfindung werden nun unter Bezug auf die beiliegenden Figuren genauer beschrieben, in denen:
- Figur 1: ein System mit einem Haushaltsgerät und einem Mobilgerät;
- Figur 2: eine beispielhafte Darstellung einer Ausgabe an einem Haushaltsgerät; und
- Figur 3: ein Ablaufdiagramm eines Verfahrens
darstellt.

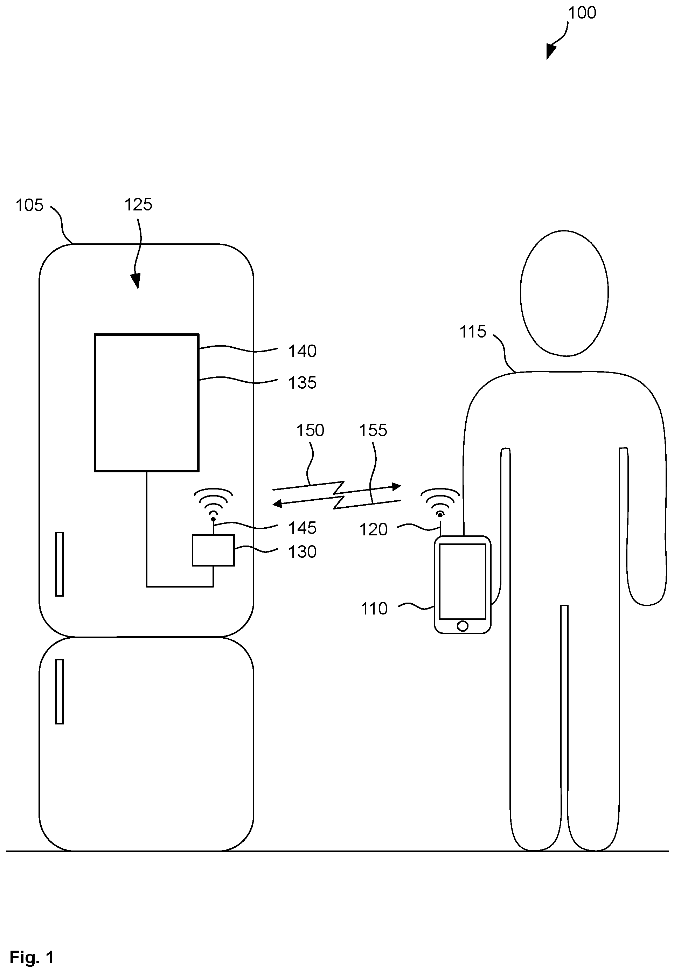

Figur 1 zeigt ein System 100 mit wenigstens einem Haushaltsgerät 105 und einem Mobilgerät 110. Auch eine optionale zentrale Stelle kann vorgesehen sein. Ein beispielhaftes Haushaltsgerät 105 ist als Kühlgerät dargestellt; es können jedoch auch andere Geräte verwendet werden, beispielsweise ein Herd, eine Dunstabzugshaube oder ein Rührgerät. Das Haushaltsgerät 105 kann insbesondere ein Küchengerät umfassen, das zum Betrieb in einer Küche eines Haushalts eingerichtet ist.

Das Mobilgerät 110 umfasst bevorzugt ein Smartphone, einen Tabletcomputer oder eine Fitnessuhr und ist üblicherweise einem vorbestimmten Benutzer 115 zugeordnet, der das Mobilgerät 110 bei sich tragen kann. Auf dem Mobilgerät 110 kann eine vorbestimmte Funktion bereitgestellt werden, die insbesondere durch ein zugeordnetes Programm oder eine Applikation erbracht werden kann. Beispielhafte Funktionen umfassen die Verwaltung einer Sammlung von Kochrezepten, eine akustische oder textuelle Kommunikation mit einem anderen, entfernten Benutzer oder eine Ausgabe von Musik. Dazu kann die Funktion mittels einer lokalen Ausgabevorrichtung am Mobilgerät 110 eine Ausgabe an den Benutzer 115 bereitstellen, insbesondere in optischer, akustischer oder haptischer Form. Ferner kann die Funktion eine Eingabe des Benutzers 115 an einer lokalen Eingabevorrichtung des Mobilgeräts 110 auswerten, die dieser beispielsweise manuell bereitstellt. Dazu können entsprechende Ein- und/oder Ausgabevorrichtungen am Mobilgerät 110 vorgesehen sein. Das Mobilgerät 110 kann auch zur Auswertung weiterer Eingaben oder Umgebungsparameter eingerichtet sein, die mittelbar durch den Benutzer 115 gesteuert werden können, etwa eine Position, eine Beschleunigung oder eine Umgebungshelligkeit.

Das Mobilgerät 110 ist üblicherweise dazu eingerichtet, mit einem drahtlosen Netzwerk verbunden zu werden, insbesondere einem Weitverkehrsnetz wie dem Internet. Über diese Verbindung kann das Mobilgerät 110 auch mit einer zentralen Stelle (wie z.B. einem Internet-Server) kommunizieren. Dazu kann das Mobilgerät 110 etwa WLAN oder Mobilfunk verwenden. Ferner umfasst das Mobilgerät 110 bevorzugt eine drahtlose Kommunikationseinrichtung 120, die dazu eingerichtet ist, eine drahtlose Datenverbindung mit einem lokalen Gerät aufzubauen, beispielsweise mit dem Haushaltsgerät 105.

Das Haushaltsgerät 105 umfasst eine Steuervorrichtung 125, die bevorzugt zur Steuerung einer Funktion des Haushaltsgeräts 105 eingerichtet ist. In einer Ausführungsform ist die Steuervorrichtung 125 dazu eingerichtet, mehrere Haushaltsgeräte 105 zu steuern. Eine Steuervorrichtung 125 kann auch eigenständig und nicht als Teil eines Haushaltsgeräts 105 ausgeführt sein. Eine Kommunikation zwischen der Steuervorrichtung 125 und einem zugeordneten Haushaltsgerät 105 erfolgt in diesem Fall bevorzugt drahtlos, beispielsweise mittels einer Technik, die als Home Connect bekannt ist. In einem Haushalt können auch mehrere Steuervorrichtungen 125 vorgesehen sein, die jeweils zur Steuerung wenigstens eines Haushaltsgeräts 105 eingerichtet sind. Dabei können die Steuervorrichtungen 125 ebenfalls miteinander datentechnisch verbunden sein.

Die Steuervorrichtung 125 umfasst eine Verarbeitungseinrichtung 130, eine Eingabevorrichtung 135, eine Ausgabevorrichtung 140 und eine drahtlose Kommunikationseinrichtung 145. Die Eingabevorrichtung 135 und die Ausgabevorrichtung 140 sind vorliegend beispielhaft als berührungsempfindlicher Bildschirm miteinander integriert ausgeführt. Eine Eingabe des Benutzers 115 kann durch Berühren eines Bereichs der Eingabevorrichtung 135 bereitgestellt werden, wobei in dem Bereich auf der Ausgabevorrichtung 140 ein optischer Hinweis auf die Eingabe dargestellt werden kann. So können kontextsensitiv unterschiedliche Eingaben ermöglicht werden.

Es wird vorgeschlagen, eine drahtlose Kopplung des Mobilgeräts 110 mit dem Haushaltsgerät 105 durchzuführen. Dann kann eine Eingabe des Benutzers 115 auf der Eingabevorrichtung 135 des Haushaltsgeräts 105 an das Mobilgerät 110 übermittelt und dort zur Steuerung der Funktion verwendet werden. In entsprechender Weise kann eine Ausgabe einer auf dem Mobilgerät 110 ablaufenden Funktion an das Haushaltsgerät 105 übermittelt und dort mittels der Ausgabevorrichtung 140 an den Benutzer 115 bereitgestellt werden.

In einer Ausführungsform können Eingaben und Ausgaben über eine einzige Datenverbindung übermittelt werden. In einer anderen Ausführungsform können eine erste Datenverbindung 150 zur Übermittlung der Eingabe und eine zweite Datenverbindung 155 zur Übermittlung der Ausgabe eingerichtet werden. Dabei können die Datenverbindungen 150, 155 voneinander unabhängig sein und unterschiedliche Protokolle oder Technologien verwenden, oder als nur eine bidirektionale Verbindung ausgeführt sein.

Über die erste Datenverbindung 150 kann sich die Steuervorrichtung 125 als Benutzerschnittstelle (user interface, UI) darstellen, die dazu eingerichtet ist, Eingaben des Benutzers 115 zu erfassen und bereitzustellen. Als zugrunde liegendes Protokoll für die Datenverbindung 150 können beispielsweise WLAN oder Bluetooth verwendet werden.

Über die zweite Datenverbindung 155 kann sich die Steuervorrichtung 125 gegenüber dem Mobilgerät 110 als UI Streaming Server darstellen, also als Gerät, das einen Strom von Ausgabedaten akzeptiert, die an einen Benutzer 115 gerichtet sein können. Als zugrunde liegendes Protokoll können beispielsweise Miracast oder AirPlay verwendet werden, die ihrerseits auf WLAN oder Bluetooth aufbauen können.

Eine Entfernung zwischen dem Haushaltsgerät 105 und dem Mobilgerät 110 kann auf der Basis einer der Datenverbindungen 150, 155 bestimmt werden. Insbesondere kann die Kommunikationseinrichtung 145 dazu eingerichtet sein, die Entfernung und optional auch eine Richtung des Mobilgeräts 110 auf der Basis von Übertragungsparametern abzuschätzen. Insbesondere können eine Signalstärke, ein Signal-Rausch-Verhältnis oder eine Fehlerrate zur Entfernungsbestimmung verwendet werden. Sind mehrere Antennen verfügbar, können zueinander korrespondierende Parameter zur Entfernungsbestimmung in einen Kontext gesetzt werden. Die Entfernung kann seitens der Steuervorrichtung 120 oder seitens des Mobilgeräts 110 bestimmt werden. Eine seitens des Mobilgeräts 110 bestimmte Entfernung kann an das Haushaltsgerät 105 übermittelt werden.

Das Mobilgerät 110 kann auch seine geographische Position bestimmen, beispielsweise auf der Basis von Bestimmungen eines Empfängers eines satellitengestützten Navigationssystems, eines Inertialsystems und/oder einer Entfernung zu einem der Haushaltsgeräte 105. Dazu kann ein Haushaltsgerät 105 ein Beacon implementieren, das seine eigene Position mittels drahtloser Signale bereitstellt. Diese Technik kann insbesondere auf der Basis von Bluetooth Low Energy (BTLE) leicht genutzt werden. Die Position des Mobilgeräts 110 kann dann auf der Basis der übermittelten Position und einer Entfernung zum Haushaltsgerät 105 bestimmt werden, die auf der Basis von Übertragungsparametern des drahtlosen Signals bestimmt werden kann. Die bestimmte Position des Mobilgeräts 110 kann an das Haushaltsgerät 115 übermittelt werden, das dann auf der Basis seiner eigenen Position die Entfernung zum Mobilgerät 110 bestimmen kann.

Bevorzugt ist die Verarbeitungseinrichtung 130 dazu eingerichtet, Eigenschaften der Ausgabevorrichtung 140 und Anforderungen einer empfangenen Ausgabe des Mobilgeräts 110 aneinander anzupassen. Beispielsweise können eine Orientierung (Hochformat oder Querformat), eine Farbfähigkeit, eine grafische Auflösung oder eine Größe eines verfügbaren Anzeigebereichs der Ausgabevorrichtung 140 als Eigenschaft an das Mobilgerät 110 bereitgestellt werden. Sollte das Mobilgerät 110 eine Ausgabe bereitstellen, die diesen Vorgaben nicht folgt, so kann die Verarbeitungseinrichtung 130 eine entsprechende Umformung der Ausgabe vornehmen. Dabei können beispielsweise Darstellungsgrößen oder Auflösungen ineinander umgerechnet werden oder eine Farbpalette kann reduziert oder anders belegt werden.

In manchen Ausführungsformen kann ein Anzeigebereich auf der Ausgabevorrichtung 140 für eine Funktion des Mobilgeräts 110 dynamisch zur Verfügung gestellt sein. In diesem Fall kann die Umrechnung transparent erfolgen oder geänderte Eigenschaften der Ausgabevorrichtung 140 können an das Mobilgerät 110 gemeldet werden.

In einer Ausführungsform ist eine Speichereinrichtung 160 vorgesehen, die mit der Verarbeitungseinrichtung 130 der Steuervorrichtung 125 verbunden ist. Die Speichereinrichtung 160 ist bevorzugt dazu eingerichtet, als Zwischenspeicher (Cache) zu arbeiten und eine Information vorübergehend aufzunehmen, die aufgrund einer Störung in der Datenverbindung 150 nicht an das Mobilgerät 110 übermittelt werden kann. Insbesondere kann bei Bedarf eine an der Eingabevorrichtung 135 erfasste Eingabe zwischengespeichert werden, bis die Datenverbindung 150 wieder hergestellt ist. Eine korrespondierende Speichereinrichtung kann seitens des Mobilgeräts 110 vorgesehen sein, um eine Ausgabe, die aufgrund einer unterbrochenen Datenverbindung 155 vorübergehend nicht an das Haushaltsgerät 105 übermittelt werden kann, zwischenzuspeichern. Ein entsprechender Zwischenspeicher kann seitens des Mobilgeräts 110 vorgesehen sein, um eine möglicherweise nicht zustellbare Ausgabe zu speichern, bis die Datenverbindung 155 wieder hergestellt ist.

Es ist bevorzugt, dass das Haushaltsgerät 105 eine erste Software-Komponente und das Mobilgerät 110 eine zweite Software-Komponente umfasst, die Eingaben und/oder Ausgaben untereinander austauschen. Dabei können die Komponenten jeweils auf eine zugrunde liegende Funktionalität des Haushaltsgeräts 105 beziehungsweise des Mobilgeräts 110 aufbauen, die eine Übermittlung über die Datenverbindungen 150, 155 bereitstellen. Sollte eine der Datenverbindungen 150, 155 vorübergehend getrennt werden, beispielsweise weil sich die Geräte 105, 110 außerhalb einer maximal überbrückbaren Reichweite befinden, weil Antennen ungünstig zueinander ausgerichtet sind oder weil sich ein Objekt, etwa eine Person 115, in einer Fresnelzone der Antennen befindet, so können zu übermittelnde Informationen seitens des Haushaltsgeräts 105 in der Speichereinrichtung 160 und/oder seitens des Mobilgeräts 110 in einer korrespondierenden Speichereinrichtung abgespeichert werden. Sollte die Datenverbindung 150, 155 innerhalb einer vorbestimmten Zeit, beispielsweise ca. 10, ca. 5 oder ca. 2 Sekunden, wieder verfügbar werden, so können die abgespeicherten Inhalte übermittelt und die Speichereinrichtungen ausgeleert werden. Die Software-Komponenten müssen von der unterbrochenen oder gestörten Datenverbindung 150, 155 nicht benachrichtigt werden. So kann beispielsweise eine kontinuierliche Ausgabe von akustischen Informationen, die seitens des Mobilgeräts bereitgestellt werden, seitens des Haushaltsgeräts 105 sichergestellt werden. Sollte eine Datenverbindung 150, 155 länger als die vorbestimmte Zeit unterbrochen oder gestört sein, so können beide Datenverbindungen 150, 155 oder nur die betroffene Datenverbindung 150, 155 abgebaut werden. Ein erneutes Aufbauen einer Datenverbindung 150, 155 kann eine neue Authentifikation eines der Geräte 105, 110 erfordern.

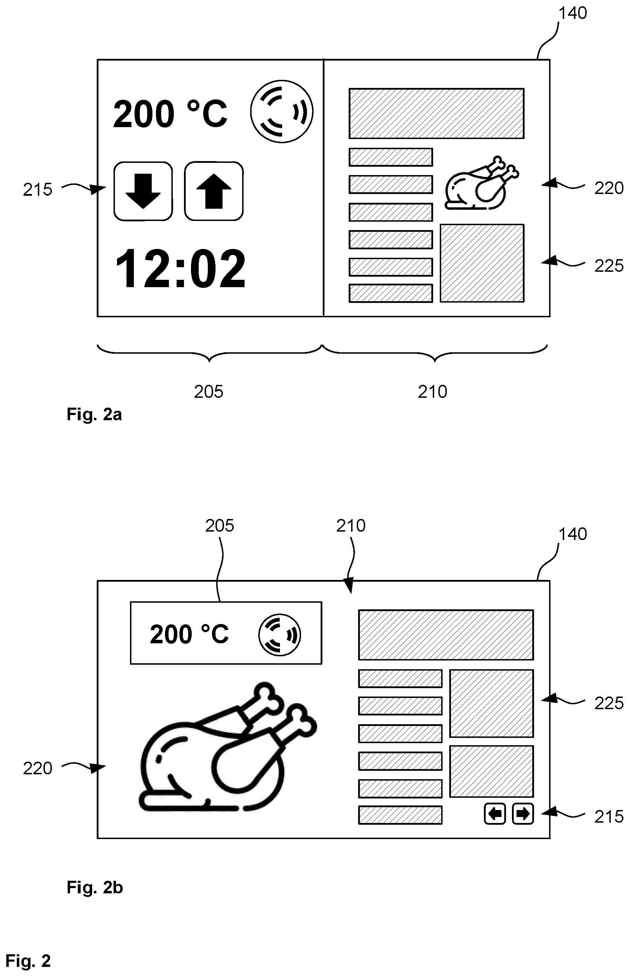

Figur 2 zeigt eine beispielhafte Darstellung einer Ausgabe an einer Ausgabevorrichtung 140 einer Steuervorrichtung 110 für ein Haushaltsgerät 105. Dabei sind jeweils ein erster Anzeigebereich 205 und ein zweiter Anzeigebereich 210 dargestellt, wobei der erste Anzeigebereich 205 einer Steuerung des Haushaltsgeräts 105 und der zweite Anzeigebereich 210 der Steuerung einer exemplarischen Funktion eines gekoppelten Mobilgeräts 110 zugeordnet ist. Die Funktion ist rein beispielhaft als Darstellung eines Kochrezepts angenommen. Als Haushaltsgerät 105 ist ebenfalls exemplarisch ein Ofen angenommen. In weiteren Ausführungsformen können mehr als zwei Anzeigebereiche 205, 210 unterstützt sein.

Figur 2a zeigt eine erste Ausführungsform, bei welcher die Anzeigebereiche 205 und 210 auf der Ausgabevorrichtung 140 nebeneinander angeordnet sind. Im ersten Anzeigebereich 205 sind beispielhaft eine Temperatur (200 °C), ein Symbol für eine Betriebsart (Umluft) und eine aktuelle Uhrzeit (12:02 Uhr) angezeigt. Außerdem sind Bedienelemente 215 dargestellt, mit denen im vorliegenden Zustand die Temperatur nach oben oder unten verstellt werden kann. Im zweiten Anzeigebereich 210 sind eine grafische Darstellung 220 einer mittels des Kochrezepts zuzubereitenden Speise und mehrere Textbereiche 225 dargestellt, die eine Anleitung oder eine Zutatenliste umfassen können.

Figur 2b zeigt eine zweite Ausführungsform, bei welcher der zweite Anzeigebereich 210 zunächst die gesamte Fläche der Ausgabevorrichtung 140 einnimmt, jedoch partiell vom ersten Anzeigebereich 205 überlagert ist. Dadurch ergeben sich andere Platzverhältnisse, die dynamisch ausgenutzt werden können. Vorliegend sind die Ausgaben der Funktion gegenüber der Ausführungsform von Figur 2a vergrößert und anders angeordnet. Zusätzlicher Raum kann durch weitere Textbereiche 225 oder ein zusätzliches Bedienelement 215 für die Funktion genutzt werden, beispielsweise zum Blättern nach rechts oder links. Ausgaben der Steuerung des Haushaltsgeräts 105 sind gegenüber der Ausführungsform von Figur 2a reduziert und verkleinert. Die Bedienelemente 215 und die Uhrzeit sind hier nicht mehr verfügbar und die Temperatur und die Betriebsart sind kleiner dargestellt.

In einer weiteren Ausführungsform können mehreren Mobilgeräten 110 - oder ihnen jeweils zugeordneten Benutzern 115 - jeweils ein Anzeigebereich 205, 210 zugeordnet sein. In einer Ausführungsform können Anzeigebereiche 205, 210 nach Art von Karteikarten-Reitern dargestellt werden. Dabei kann zu einem Zeitpunkt nur einer der Anzeigebereiche 205, 210 dargestellt werden, und die Existenz weiterer Anzeigebereiche 205, 210 kann an dargestellten Karteikarten-Reitern erkennbar sein. Zur Darstellung eines der weiteren Anzeigebereiche 205, 210 kann der entsprechende Karteikarten-Reiter selektiert werden, sodass der ihm zugeordnete Inhalt auf der Ausgabevorrichtung 140 dargestellt wird.

Unter welchen Umständen eine Ausgabe einer Funktion auf einem Anzeigebereich 205, 210 auf der Ausgabevorrichtung 140 erfolgt, wie groß oder positioniert ein Anzeigebereich 205, 210 ist, oder wie mehrere Anzeigebereiche 205, 210 auf der Ausgabevorrichtung 140 angeordnet sind, kann mittels Regeln bestimmt werden, die auch Policies genannt werden können.

Beispielsweise können Prioritäten unter Benutzern 115, Funktionen, Mobilgeräten 110 oder Anzeigebereichen 205, 210 gebildet sein. Die genannten Parameter können auf der Basis von Regeln ebenfalls mit Prioritäten versehen sein, sodass beispielsweise bestimmt werden kann, ob eine erste Funktion, deren Priorität höher als die einer zweiten Funktion ist, deren zugeordnetes Mobilgerät 110 aber eine geringere Priorität als das der zweiten Funktion zugeordnetes Mobilgerät 110, im Ergebnis vor der zweiten Funktion auf die Ausgabevorrichtung 140 zugreifen darf oder nicht. Prioritäten können auch ereignisbasiert bestimmt oder verändert werden. Beispielsweise kann die Priorität einer Funktion, deren Ausgabe sich verändert, höher sein als die einer Funktion, deren Ausgabe sich nicht ändert. Die Priorität einer Funktion kann vorübergehend erhöht werden, wenn sich ihre Ausgabe ändert. Bevorzugt sind die Prioritäten und Regeln derart gestaltet, dass eine Steuerbarkeit des Haushaltsgeräts 105 stets gewährleistet ist und im Zweifelsfall einer Steuerbarkeit einer Funktion eines Mobilgeräts 110 vorgeht.

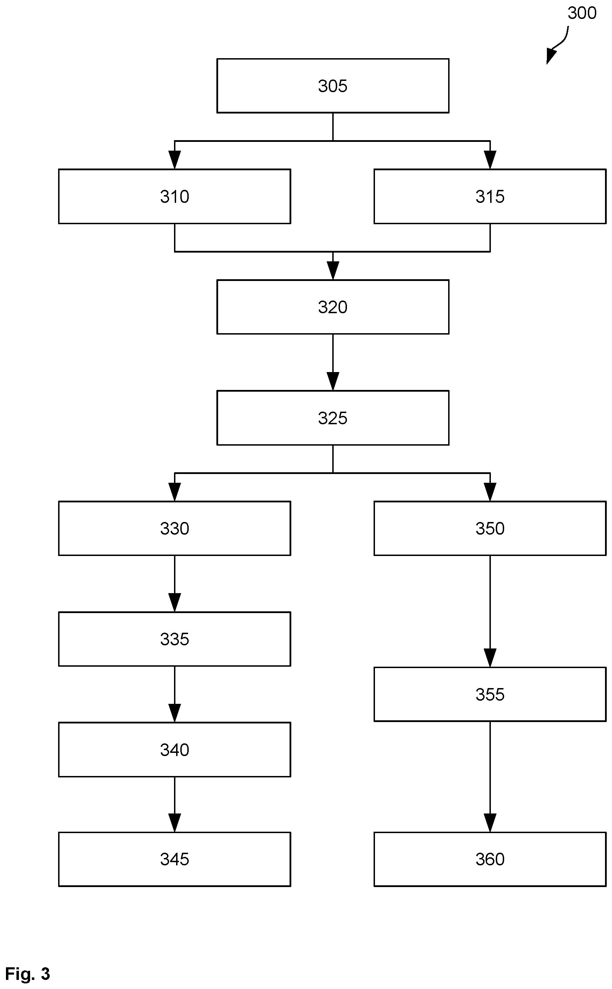

Figur 3 zeigt ein Ablaufdiagramm eines Verfahrens 300 zur Steuerung eines Haushaltsgeräts 105. In einem Schritt 305 kann ein Mobilgerät 105 in einem vorbestimmten Bereich um ein Haushaltsgerät 105 erfasst werden oder umgekehrt. Der Bereich kann durch eine Reichweite einer verwendeten Kommunikationstechnologie vorgegeben sein. Dieser Schritt kann seitens des Haushaltsgeräts 105 oder des Mobilgeräts 110 durchgeführt werden.

In einem Schritt 310 kann eine Verbindung für Eingaben an eine Funktion des Mobilgeräts 110 hergestellt werden, beispielsweise indem das Haushaltsgerät 105 beziehungsweise die Steuervorrichtung 125 als Eingabegerät über eine Bluetooth-Verbindung 150 gekoppelt wird. In einem Schritt 315 kann eine Verbindung für Ausgaben der Funktion des Mobilgeräts 110 hergestellt werden, beispielsweise indem die Steuervorrichtung 125 als Ul Streaming Server über eine WLAN-Verbindung 155 an das Mobilgerät 110 angekoppelt wird.

Die Datenverbindungen 150, 155 folgen bevorzugt bereits etablierten Standards zur entfernten Ausgabe beziehungsweise Eingabe. Bevorzugt wird ein offen dokumentierter Standard verwendet, der weiter bevorzugt voraussichtlich für längere Zeit nicht wesentlich verändert oder inkompatibel erweitert wird. Diese Zeit kann eine voraussichtliche Lebensdauer des Haushaltsgeräts abdecken, beispielsweise ca. 10 - 30 Jahre. Weiter bevorzugt existiert ein Test, mit dem bestimmt werden kann, dass das Haushaltsgerät 105 den gewählten Standard in einer vorbestimmten Version fehlerfrei implementiert. Die Erfüllung des Tests kann zertifiziert werden. Die drahtlosen Datenverbindungen 150, 155 können voneinander getrennt und unabhängig sein oder es kann eine Datenverbindung 150, 155 sowohl für Eingaben als auch für Ausgaben verwendet werden.

In einem Schritt 320 kann eine Entfernung zwischen dem Haushaltsgerät 105 und dem Mobilgerät 110 bestimmt werden, insbesondere auf der Basis eines Übertragungsparameters einer der Datenverbindungen 150, 155. In einem Schritt 325 kann bestimmt werden, ob eine Eingabe und/oder eine Ausgabe für die Funktion am Haushaltsgerät 105 erfolgen soll. Dazu kann beispielsweise eine Bestätigung des Benutzers abgefragt werden. Es kann bestimmt werden, ob die bestimmte Entfernung in einem vorbestimmten Bereich liegt, in dem die Umleitung erfolgen soll. Es kann auch bestimmt werden, dass eine Eingabe oder Ausgabe eines anderen Benutzers 115 gerade höhere Priorität genießt, sodass die Umleitung für den vorliegenden Benutzer 115 nicht verfügbar sein kann. Die Umleitung kann auch nicht verfügbar sein, wenn ein Gerätezustand des Haushaltsgeräts 105 eine direkte und exklusive Bedienung des Haushaltsgeräts mittels der Einrichtungen 135, 140 erfordert, beispielsweise weil eine Übertemperatur oder eine anderweitig drohende Gefahr festgestellt wurde. Soll die Umleitung erfolgen, so kann mit dem Verfahren 300 fortgefahren werden.

In einem Schritt 330 kann eine Eingabe am Haushaltsgerät 105 erfasst werden. In einem Schritt 335 kann ein der Eingabe zugeordnetes Mobilgerät 110 bestimmt werden, falls mehrere Mobilgeräte 110 mit dem Haushaltsgerät 105 gekoppelt sein können. In einem Schritt 340 kann eine dem Mobilgerät 110 zugeordnete Funktion bestimmt werden, falls mehrere Funktionen des Mobilgeräts 110 Eingaben des Haushaltsgeräts 105 akzeptieren können. In einem Schritt 345 kann die bestimmte Eingabe der Funktion bereitgestellt werden.

Nebenläufig dazu kann in einem Schritt 350 eine Ausgabe einer Funktion des Mobilgeräts 110 erfasst werden. In einem Schritt 355 kann ein Ausgabebereich der Ausgabevorrichtung 140 bestimmt werden, welcher der Funktion zugeordnet ist. Sollte der Funktion aktuell kein Ausgabebereich zugeordnet sein, können vorhandene Ausgabebereiche neu zugeordnet oder ein neuer Ausgabebereich für die Funktion gebildet werden. In einem Schritt 360 kann die Ausgabe der Funktion auf dem zugeordneten Ausgabebereich bereitgestellt werden.

### Bezugszeichen

- 100: System
- 105: Haushaltsgerät
- 110: Mobilgerät
- 115: Benutzer
- 120: Kommunikationseinrichtung
- 125: Steuervorrichtung
- 130: Verarbeitungseinrichtung
- 135: Eingabevorrichtung
- 140: Ausgabevorrichtung
- 145: drahtlose Kommunikationseinrichtung
- 150: erste Datenverbindung
- 155: zweite Datenverbindung

- 205: erster Anzeigebereich
- 210: zweiter Anzeigebereich
- 215: Bedienelement
- 220: grafische Darstellung
- 225: Textbereich

- 300: Verfahren
- 305: Mobilgerät erfassen
- 310: Herstellen Verbindung für Eingaben
- 315: Herstellen Verbindung für Ausgaben
- 320: Entfernung bestimmen
- 325: Eingabe / Ausgabe lokal?
- 330: Eingabe erfassen
- 335: zugeordnetes Mobilgerät bestimmen
- 340: zugeordnete Funktion bestimmen
- 345: Eingabe bereitstellen
- 350: Ausgabe erfassen
- 355: zugeordneten Ausgabebereich bestimmen
- 360: Ausgabe bereitstellen

## Patentansprüche

1. Haushaltsgerät (105), umfassend:
eine drahtlose Kommunikationseinrichtung (145);
- eine Ausgabevorrichtung (140);
- eine Eingabevorrichtung (135); und
- eine Verarbeitungseinrichtung (130), die dazu eingerichtet ist, ein Mobilgerät (110) drahtlos mit dem Haushaltsgerät (105) zu koppeln, eine Ausgabe des Mobilgeräts (110) mittels der Ausgabevorrichtung (140) bereitzustellen und eine Eingabe an der Eingabevorrichtung (135) dem Mobilgerät (110) bereitzustellen;
**dadurch gekennzeichnet,**
**dass** die Ausgabevorrichtung (140) derart in mehrere Anzeigebereiche unterteilt ist,
**dass**
- eine Funktion des Haushaltsgeräts (105) sowie
- eine zusätzliche Funktion, die über die Steuerung des Haushaltsgeräts (105) hinausgeht, und/oder eine Funktion des Mobilgeräts (110)
parallel zueinander zugänglich sind.

2. Haushaltsgerät (105) nach Anspruch 1, wobei die Ausgabevorrichtung (140) eine optische Anzeige mit wenigstens zwei Anzeigebereichen umfasst und die Verarbeitungseinrichtung (130) dazu eingerichtet ist, parallel zueinander
- auf einem ersten Anzeigebereich (205) eine Information des Haushaltsgeräts (105) darzustellen und
- auf einem zweiten Anzeigebereich (210) die Ausgabe des Mobilgeräts (110) darzustellen.

3. Haushaltsgerät (105) nach Anspruch 2, wobei das Haushaltsgerät (105) dazu eingerichtet ist, parallel zueinander
- auf dem ersten Anzeigebereich (205) eine Information des Haushaltsgeräts (105), die einen Betriebsparameter oder einen Arbeitszustand des Haushaltsgeräts (105) betrifft, und
- auf dem zweiten Anzeigebereich (210) als zusätzliche Funktion eine Funktion des Mobilgeräts (110)
bereitzustellen.

4. Haushaltsgerät (105) nach Anspruch 2 oder 3, wobei auf der Ausgabevorrichtung (140) der erste Anzeigebereich (205) für eine Funktion des Haushaltsgeräts (105) immer sichtbar ist,
wohingegen der zweite Anzeigebereich (210) für eine Funktion des Mobilgeräts (110) auf der Ausgabevorrichtung (140) verkleinerbar, verdeckbar und/oder ausblendbar ist.

5. Haushaltsgerät (105) nach einem der vorangehenden Ansprüche, wobei die Eingabevorrichtung (135) ein erstes und ein zweites Bedienelement umfasst und die Verarbeitungseinrichtung (130) dazu eingerichtet ist,
- eine Funktion des Haushaltsgeräts (105) in Abhängigkeit einer Betätigung des ersten Bedienelements zu steuern und
- eine Betätigung des zweiten Bedienelements dem Mobilgerät (110) bereitzustellen.

6. Haushaltsgerät (105) nach einem der vorangehenden Ansprüche, wobei die Verarbeitungseinrichtung (130) dazu eingerichtet ist, zwei voneinander unabhängige drahtlose Datenverbindungen (150, 155) herzustellen, von denen eine einer Ausgabe des Mobilgeräts (110) und die andere einer Eingabe an das Mobilgerät (110) zugeordnet ist.

7. Haushaltsgerät (105) nach einem der vorangehenden Ansprüche, wobei die Verarbeitungseinrichtung (130)
- dazu eingerichtet ist, eine Kopplung nur dann durchzuführen, wenn ein Abstand des Mobilgeräts (110) zum Haushaltsgerät (105) einen ersten vorbestimmten Schwellenwert unterschreitet, oder
- dazu eingerichtet ist, eine bestehende Kopplung aufzulösen, wenn ein Abstand des Mobilgeräts (110) zum Haushaltsgerät (105) einen zweiten vorbestimmten Schwellenwert überschreitet, der größer als der erste Schwellenwert ist.

8. Haushaltsgerät (105) nach einem der vorangehenden Ansprüche, wobei die Verarbeitungseinrichtung (130) dazu eingerichtet ist, ein weiteres Mobilgerät (110) drahtlos mit dem Haushaltsgerät (105) zu koppeln, eine Ausgabe des weiteren Mobilgeräts (110) mittels der Ausgabevorrichtung (140) bereitzustellen und eine Eingabe an der Eingabevorrichtung (135) dem weiteren Mobilgerät (110) bereitzustellen.

9. Haushaltsgerät (105) nach Anspruch 8, wobei die Verarbeitungseinrichtung (130) dazu eingerichtet ist, eine Zuordnung von Ausgaben der Mobilgeräte (110) an die Ausgabevorrichtung (140) und/oder eine Zuordnung von Eingaben an die Mobilgerät (110) vorzunehmen.

10. System (100), umfassend mehrere Haushaltsgeräte (105) jeweils nach einem der vorangehenden Ansprüche, wobei Verarbeitungseinrichtungen (130) der Haushaltsgeräte (105) jeweils dazu eingerichtet sind, einen Abstand des zugeordneten Haushaltsgeräts (105) zum Mobilgerät (110) zu bestimmen; wobei nur eine Eingabe vom nächstgelegenen Haushaltsgerät (105) an das Mobilgerät (110) bereitgestellt wird.

11. System (100), umfassend mehrere Haushaltsgeräte (105) jeweils nach einem der vorangehenden Ansprüche, wobei Verarbeitungseinrichtungen (130) der Haushaltsgeräte (105) jeweils dazu eingerichtet sind, eine Ausgabe des Mobilgeräts (110) mittels einer zugeordneten Ausgabevorrichtung (140) bereitzustellen.

## Claims

1. Household appliance (105), comprising:
a wireless communication facility (145);
- an output apparatus (140);
- an input apparatus (135); and
- a processing facility (130), which is configured to couple a mobile device (110) wirelessly with the household appliance (105), to provide an output of the mobile device (110) by means of the output apparatus (140), and to provide an input on the input apparatus (135) to the mobile device (110);
**characterised in that**
the output apparatus (140) is subdivided into several display regions such that
- a function of the household appliance (105) and
- an additional function which goes beyond controlling the household appliance (105) and/or a function of the mobile device (110)
are accessible in parallel with one another.

2. Household appliance (105) according to claim 1, wherein the output apparatus (140) comprises a visual display with at least two display regions and the processing facility (130) is configured, in parallel with one another,
- to show an item of information of the household appliance (105) on a first display region (205) and
- to show the output of the mobile device (110) on a second display region (210).

3. Household appliance (105) according to claim 2, wherein the household appliance (105) is configured, in parallel with one another,
- to provide an item of information of the household appliance (105) which relates to an operating parameter or a working state of the household appliance (105) on the first display region (205), and
- to provide a function of the mobile device (110) as an additional function on the second display region (210).

4. Household appliance (105) according to claim 2 or 3, wherein the first display region (205) for a function of the household appliance (105) is always visible on the output apparatus (140),
whereas the second display region (210) for a function of the mobile device (110) on the output apparatus (140) can be minimised, covered and/or hidden.

5. Household appliance (105) according to one of the preceding claims, wherein the input apparatus (135) comprises a first and a second operating element and the processing facility (130) is configured
- to control a function of the household appliance (105) as a function of an actuation of the first operating element and
- to provide an actuation of the second operating element to the mobile device (110).

6. Household appliance (105) according to one of the preceding claims, wherein the processing facility (130) is configured to establish two mutually independent, wireless data connections (150, 155), of which one is assigned to an output of the mobile device (110) and the other to an input to the mobile device (110).

7. Household appliance (105) according to one of the preceding claims, wherein the processing facility (130)
- is configured to carry out a coupling only when a distance of the mobile device (110) from the household appliance (105) falls below a first predetermined threshold value, or
- is configured to remove an existing coupling when a distance of the mobile device (110) from the household appliance (105) exceeds a second predetermined threshold value which is greater than the first threshold value.

8. Household appliance (105) according to one of the preceding claims, wherein the processing facility (130) is configured to couple a further mobile device (110) wirelessly with the household appliance (105), to provide an output of the further mobile device (110) by means of the output apparatus (140), and to provide an input on the input apparatus (135) to the further mobile device (110).

9. Household appliance (105) according to claim 8, wherein the processing facility (130) is configured to carry out an assignment of outputs of the mobile devices (110) to the output apparatus (140) and/or an assignment of inputs to the mobile device (110).

10. System (100) comprising several household appliances (105) in each case according to one of the preceding claims, wherein processing facilities (130) of the household appliances (105) are in each case configured to determine a distance of the assigned household appliance (105) from the mobile device (110); wherein only one input from the closest household appliance (105) is provided to the mobile device (110).

11. System (100) comprising several household appliances (105) in each case according to one of the preceding claims, wherein processing facilities (130) of the household appliances (105) are in each case configured to provide an output of the mobile device (110) by means of an assigned output apparatus (140).

## Revendications

1. Appareil électroménager (105) comprenant :
un dispositif de communication sans fil (145),
- un dispositif de sortie (140),
- un dispositif d'entrée (135), et
- un dispositif de traitement (130), qui est configuré pour coupler un appareil mobile (110) sans fil avec l'appareil électroménager (105), produire une sortie de l'appareil mobile (110) au moyen du dispositif de sortie (140) et fournir une entrée émise au niveau du dispositif d'entrée (135) à l'appareil mobile (110),
**caractérisé en ce que**
le dispositif de sortie (140) est subdivisé en plusieurs zones d'affichage, de telle sorte
- qu'une fonctionnalité de l'appareil électroménager (105), ainsi
- qu'une fonctionnalité supplémentaire, qui surpasse la commande de l'appareil électroménager (105), et/ou une fonctionnalité de l'appareil mobile (110) sont accessibles en parallèle.

2. Appareil électroménager (105) selon la revendication 1, dans lequel le dispositif de sortie (140) comprend un affichage optique comprenant au moins deux zones d'affichage et le dispositif de traitement (130) est configuré pour, en parallèle :
- représenter sur une première zone d'affichage (205) une information de l'appareil électroménager (105), et
- représenter sur une deuxième zone d'affichage (210) la sortie de l'appareil mobile (110).

3. Appareil électroménager (105) selon la revendication 2, dans lequel l'appareil électroménager (105) est configuré pour, en parallèle :
- exposer sur la première zone d'affichage (205) une information de l'appareil électroménager (105), qui concerne un paramètre de fonctionnement ou un état de fonctionnement de l'appareil électroménager (105), et
- exposer sur la deuxième zone d'affichage (210) une fonctionnalité de l'appareil mobile (110) à titre de fonctionnalité supplémentaire.

4. Appareil électroménager (105) selon la revendication 2 ou 3, dans lequel la première zone d'affichage (205) pour une fonctionnalité de l'appareil électroménager (105) est toujours visible sur le dispositif de sortie (140),
tandis que la deuxième zone d'affichage (210) pour une fonctionnalité de l'appareil mobile (110) peut être réduite, recouverte et/ou masquée sur le dispositif de sortie (140).

5. Appareil électroménager (105) selon l'une des revendications précédentes, dans lequel le dispositif d'entrée (135) comprend un premier et un deuxième élément de commande et le dispositif de traitement (130) est configuré pour :
- commander une fonctionnalité de l'appareil électroménager (105) en fonction d'un actionnement du premier élément de commande, et
- fournir un actionnement du deuxième élément de commande à l'appareil mobile (110).

6. Appareil électroménager (105) selon l'une des revendications précédentes, dans lequel le dispositif de traitement (130) est configuré pour produire deux connexions de données (150, 155) sans fil indépendantes l'une de l'autre, dont l'une est affectée à une sortie de l'appareil mobile (110) et l'autre est affectée à une entrée sur l'appareil mobile (110).

7. Appareil électroménager (105) selon l'une des revendications précédentes, dans lequel le dispositif de traitement (130)
- est configuré pour effectuer un couplage uniquement si une distance de l'appareil mobile (110) à l'appareil électroménager (105) est inférieure à une première valeur seuil prédéterminée, ou
- est configuré pour rompre un couplage existant si une distance de l'appareil mobile (110) à l'appareil électroménager (105) est supérieure à une deuxième valeur seuil prédéterminée, qui est supérieure à la première valeur seuil.

8. Appareil électroménager (105) selon l'une des revendications précédentes, dans lequel le dispositif de traitement (130) est configuré pour coupler un autre appareil mobile (110) sans fil à l'appareil électroménager (105), fournir une sortie de l'autre appareil mobile (110) au moyen du dispositif de sortie (140) et fournir une entrée au dispositif d'entrée (135) à l'autre appareil mobile (110).

9. Appareil électroménager (105) selon la revendication 8, dans lequel le dispositif de traitement (130) est configuré pour réaliser une affectation des sorties des appareils mobiles (110) au dispositif de sortie (140) et/ou une affectation des entrées à l'appareil mobile (110).

10. Système (100), comprenant plusieurs appareils électroménagers (105) respectivement selon l'une des revendications précédentes, dans lequel des dispositifs de traitement (130) des appareils électroménagers (105) sont respectivement configurés pour déterminer une distance de l'appareil électroménager associé (105) à l'appareil mobile (110), dans lequel seule une entrée de l'appareil électroménager (105) le plus proche est fournie à l'appareil mobile (110).

11. Système (100), comprenant plusieurs appareils électroménagers (105) respectivement selon l'une des revendications précédentes, dans lequel des dispositifs de traitement (130) des appareils électroménagers (105) sont respectivement configurés pour produire une sortie de l'appareil mobile (110) au moyen d'un dispositif de sortie (140) affecté.
